# EUROPÄISCHE PATENTANMELDUNG

(11) **EP 1 650 479 A1**
(43) Veröffentlichungstag der Anmeldung: **26.04.2006**
(21) Anmeldenummer: 04405658.8
(22) Anmeldetag: 25.10.2004
(51) Int. Cl.: F16H 63/32

(54) **Schaltgabel für Fahrzeuggetriebe mit Gleitflächen bildenden Reitern**

(71) Anmelder: Euroflamm GmbH, 28719 Bremen (DE)
(72) Erfinder: Nels, Terry, Beavercreek, OH 45385 (US); Spreckels, Marcus, Dr., 28359 Bremen (DE); Guthrie, Douglas, Centerville, OH 45458 (US); Lassau, Ralf H., 28719 Bremen (DE); Bremberger, Ronald, 09720-50 Sao Bernardo do Campo (SP) (BR)
(74) Vertreter: Sulzer Management AG

(57) **Zusammenfassung**

Die Schaltgabel (1) für Fahrzeuggetriebe trägt Reiter (2, 3), die Gleitflächen bilden. Die Reiter lassen sich auf einen Grundkörper (10) der Schaltgabel aufsetzen und dabei befestigen. Sie bestehen aus beschichtem Metall, insbesondere Stahl oder Aluminium in Form eines geformten Blechs oder Rohrs. Die Gleitflächen (20a, 20b; 30a, 30b) sind durch Beschichten gefertigt, wobei das Beschichtungsmaterial aus einem Festschmierstoff besteht.

## Beschreibung

Die Erfindung betrifft eine Schaltgabel für Fahrzeuggetriebe mit Gleitflächen bildenden Reitern gemäss Oberbegriff von Anspruch 1. Sie betrifft auch einen Reiter zu einer erfindungsgemässen Schaltgabel sowie Verfahren zum Herstellen eines solchen Reiters.

Aus der DE-A- 101 26 436 ist eine Schaltgabel eines Fahrzeuggetriebes mit einem Gleitschuh aus Messing bekannt, wobei der Gleitschuh ein Gleitflächen bildender Reiter ist. Insbesondere wird beschrieben, wie der reiterartige Gleitschuh mittels Widerstandsschweissen auf einen aus Stahl gefertigten Grundkörper der Schaltgabel befestigt werden kann. Für den Gleitschuh wird Messing genommen, da dieser Werkstoff eine Art Festschmierstoff ist, der sich gut eignet sowohl hinsichtlich Gleitfähigkeit ("Selbstschmierung") als auch hinsichtlich Verschleissfestigkeit. Ältere Schaltgabeln mit Gleitflächen bildenden Messingreitern sind nicht durch Stoffschluss-Verbindungen (Schweissen, Löten) sondern Formschluss-Verbindungen (z. B. mittels Klipselementen) am Grundkörper befestigt worden.

Aufgabe der Erfindung ist es, eine Schaltgabel mit Gleitflächen bildenden Reitern zu schaffen, die im Vergleich zu den aus Messing gefertigten Reitern mindest gleich gute Gleiteigenschaften haben und ebenfalls verschleissfest sind. Diese Aufgabe wird durch die im Anspruch 1 definierte Schaltgabel gelöst.

Die Schaltgabel für Fahrzeuggetriebe trägt Reiter, die Gleitflächen bilden. Die Reiter lassen sich auf einen Grundkörper der Schaltgabel aufsetzen und dabei befestigen. Sie bestehen aus beschichtem Metall, insbesondere Stahl oder Aluminium in Form eines geformten Blechs oder Rohrs. Die Gleitflächen sind durch Beschichten gefertigt, wobei das Beschichtungsmaterial aus einem Festschmierstoff besteht.

Die abhängigen Ansprüche 2 bis 8 betreffen vorteilhafte Ausführungsformen der erfindungsgemässen Schaltgabel. Ein Reiter zu dieser Schaltgabel ist Gegenstand der Ansprüche 9 bis 11. Anspruch 12 bezieht sich auf ein Verfahren zum Herstellen des Reiters.

Nachfolgend wird die Erfindung anhand der Zeichnungen erläutert. Es zeigen:
- Fig. 1: eine Schaltgabel,
- Fig. 2: einen zentralen Reiter für die Schaltgabel,
- Fig. 3: ein ausgeschnittes Blechstück, aus dem sich der Reiter der Fig. 2 fertigen lässt,
- Fig. 4: das Blechstück der Fig. 3 - quergeschnitten - nach einer ersten plastischen Umformung,
- Fig. 5: das gleiche Blechstück nach einer zweiten plastischen Umformung, die den Reiter der Fig. 2 als Ergebnis hat,
- Fig. 6: einen lateralen Reiter oder Gleitschuh,
- Fig. 7: einen Querschnitt durch den lateralen Reiter der Fig. 6,
- Fig. 8: eine zweite Ausführungsform des lateralen Reiters in einer Draufsicht-Darstellung,
- Fig. 9: einen Querschnitt durch den lateralen Reiter der Fig. 8,
- Fig. 10: eine dritte Ausführungsform des lateralen Reiters, wobei nur eine Hälfte dargestellt ist,
- Fig. 11: eine Draufsicht auf den Reiter der Fig. 10, der noch nicht auf die Schaltgabel aufgesetzt ist,
- Fig. 12, 13: eine vierte Ausführungsform, die entsprechend den Fig. 10 und 11 dargestellt ist, und
- Fig. 14, 15: eine fünfte sowie sechste Ausführungsform des lateralen Reiters.

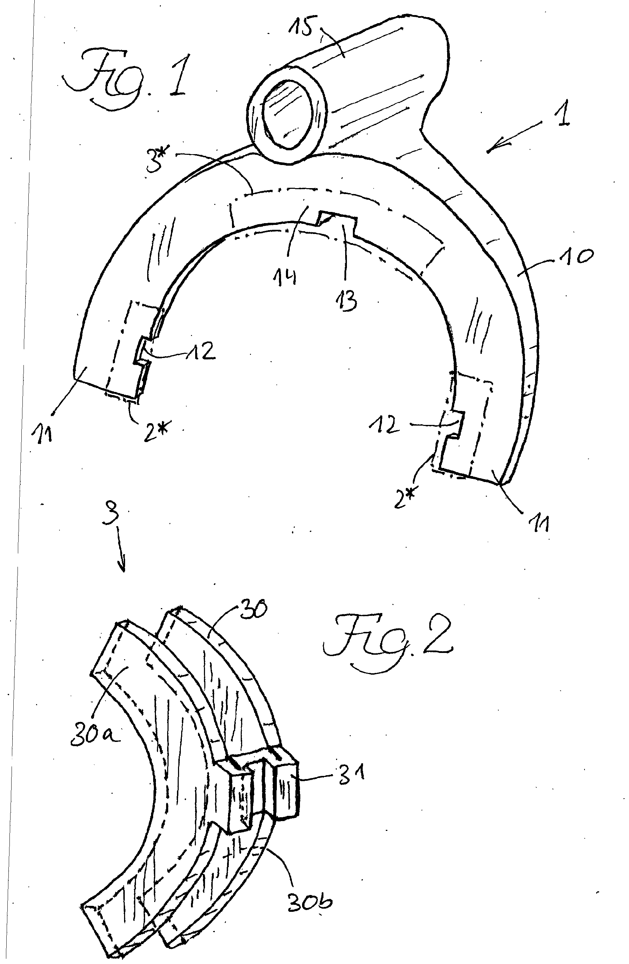

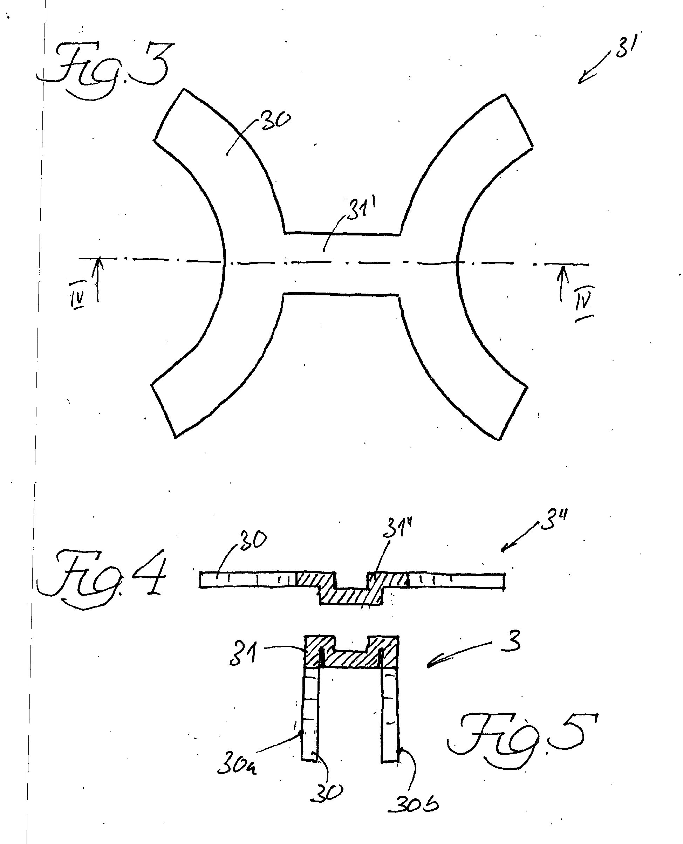

Eine Schaltgabel 1 für Fahrzeuggetriebe, wie sie in Fig. 1 abgebildet ist, umfasst einen Grundkörper 10 mit zwei Schenkeln mit Enden 11 und einem unter einer Befestigungsnabe 15 liegenden zentralen Bereich 14. Nuten 12 an den Enden 11 sind Befestigungsstellen für Gleitschuhe 2 (siehe Figuren 6 bis 9), die hier als laterale Reiter oder kurz Reiter 2 bezeichnet werden. Eine Nut 13 im zentralen Bereich 14 ist eine weitere Befestigungsstelle für einen zentralen Reiter 3 (siehe Figuren 2 bis 5). Von diesen Reitern 2 und 3 sind nur Umrisse 2^{*} bzw. 3^{*} strichpunktiert dargestellt.

Die Reiter 2 und 3 weisen Gleitflächen 20a, 20b bzw. 30a, 30b an ihren Oberflächen auf. Sie lassen sich auf den Grundkörper 10 der Schaltgabel 1 aufsetzen und dabei in den Nuten 12 bzw. 13 befestigen. Erfindungsgemäss sind die Reiter 2 und 3 hinsichtlich der von ihnen benötigten Funktionalitäten, nämlich mechanische Belastbarkeit und Gleiteigenschaften, durch zwei Komponenten charakterisiert: durch ein geformtes Stück Metallblech (oder auch ein Vierkantrohr), dessen Gestalt durch Ausschneiden sowie plastisches Umformen erzeugt wird, und durch Gleitflächen in Form von Beschichtungen, die durch Beschichten mit Festschmierstoffen erzeugt sind.

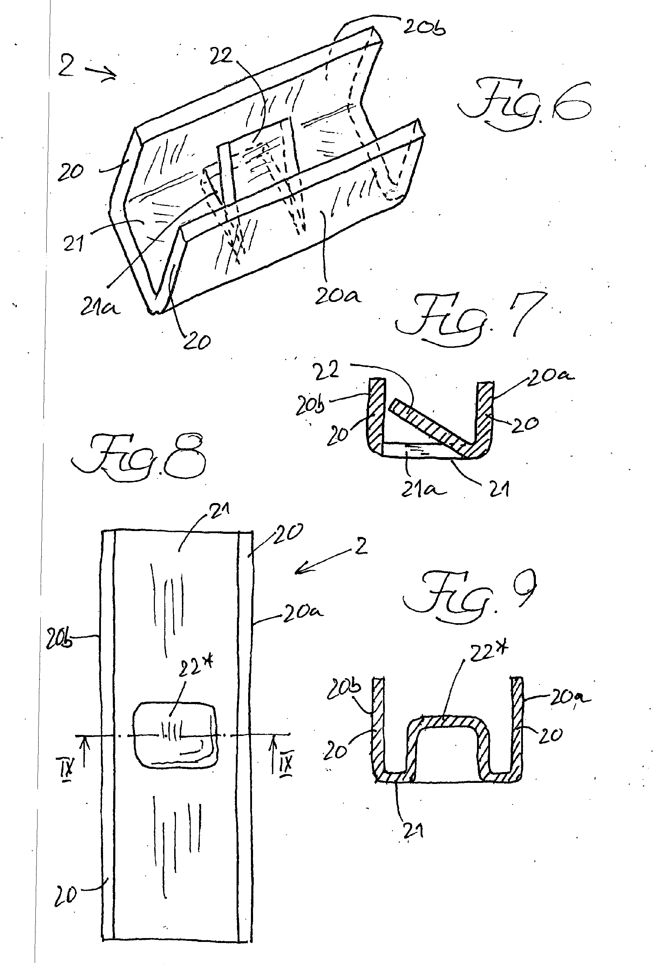

Der in Fig. 2 gezeigte zentrale Reiter 3 umfasst zwei langgestreckte Flanken 30, welche die Form von Ringabschnitten haben und auf denen die Gleitflächen 30a und 30b durch Beschichten aufgebracht sind. Die Flanken 30 hängen an je einer ihrer langen Seite über einen verbindenden Teil 31 zusammen. Der verbindende Teil 31 ist ein durch Umformung erzeugtes Element. Das Umformen ist anhand der folgenden Figuren 3 bis 5 illustriert.

Der Reiter 3 lässt sich mit dem Element 31 in der Nut 13 der Schaltgabel 1 durch eine Stoffschluss-Verbindung (Schweissen, Löten) oder eine Formschluss-Verbindung (beispielsweise mit einschnappbaren Elementen) befestigen.

Beim Herstellen des Reiters 3 wird in einem ersten Schritt ein geeignet geformtes Blechstück 3' aus einem Metallblech (aus Stahl oder Aluminium) ausgeschnitten. Die äussere Kontur dieses Blechstücks 3' ist in Fig. 3 dargestellt. Das Blechstück 3' setzt sich aus zwei Flanken 30 und einem Brückenteil 31' zusammen. Das Ausschneiden kann durch Stanzen oder mittels eines Laserstrahl-Schneidverfahrens erfolgen. In einem zweiten Schritt wird das Blechstück 3' umgeformt. Die Fig. 4 zeigt anhand einem Schnitt längs der Linien IV - IV in Fig. 3 das Ergebnis eines ersten Umformschritts (erster Teilschritt des zweiten Verfahrensschritts), bei dem der Brückenteil 31' eine neue Form 31" annimmt. Das umgeformte Blechstück 3" wird in einem zweiten Teilschritt zur Form des Reiters 3 weiter umgeformt. Bei den beiden Teilschritten des zweiten Verfahrensschritts werden die Blechstücke 3' bzw. 3" mittels Einpressen in ein formgebendes Werkzeug plastisch umgeformt. Schliesslich werden in einem dritten Verfahrensschritt die Festschmierstoff enthaltenden Gleitflächen 30a und 30b durch Beschichten auf dem Reiter 3 aufgebracht.

Grundsätzlich ist es auch möglich, ein Blech zuerst zu beschichten und anschliessend umzuformen.

Die Dicke der Beschichtung ist grösser als 1 µm und kleiner als 1 mm; vorzugsweise hat sie einen Wert zwischen 0.08 und 0.12 mm.

Die Beschichtung kann eine weitgehend homogene Phase bilden, die aus dem Festschmierstoff erzeugt ist. Sie kann auch aus einem Verbundwerkstoff bestehen, wobei der Festschmierstoff in Form von Partikeln eine disperse Phase des Verbundwerkstoffs bildet. Der Volumenanteil der dispersen Phase ist mit Vorteil grösser als jener einer kontinuierlichen Matrixphase, in die die Partikel des Festschmierstoffs eingebettet sind.

Im Fall einer einphasigen Beschichtung 30a, 30b kann der Festschmierstoff mittels einem thermischen Spritzverfahren, insbesondere Flammspritzen, auf die aus Metallblech bestehenden Flanken 30 aufgetragen werden. Als Festschmierstoff eignen sich Molybdän oder eine Messinglegierung. Im Fall einer zweiphasigen Beschichtung 30a, 30b kann die Matrixphase mit einem aushärtenden Klebstoff oder einem aufschmelzbaren Bindemittel erzeugt werden. Der Festschmierstoff besteht vorzugsweise bis mindestens zu 90 Vol-% aus Kohlenstoff (Carbon).

In Fig. 6 ist ein lateraler Reiter 2 oder Gleitschuh mit zwei langgestreckten Flanken 20 und einem Brückenstück 21 dargestellt. Innerhalb des Brückenstücks 21 sind zusätzliche Trennschnitte 21 a erzeugt worden, die es erlauben, eine Lasche oder Zunge 22 in den Innenbereich zwischen den Flanken 20 hinein biegen zu können. In Fig. 7 ist ein Querschnitt durch die Mitte des Reiters 2 gezeigt. Die Zunge 22 dient der Befestigung am Grundkörper 10 der Schaltgabel 1 (in der Nut 12). Gleitflächen 20a und 20b erhält man durch Beschichten, wie es oben beschrieben worden ist. Statt einer Zunge können auch zwei oder mehr Zungen vorgesehen sein.

Die Fig. 8 zeigt eine zweite Ausführungsform des lateralen Reiters 2 in einer Draufsicht-Darstellung, die nur bezüglich der Befestigungsstelle sich von der ersten Ausführungsform der Fig. 6 unterschiedet: Anstelle der Zunge 22 ist eine kuppelartige Erhebung 22* vorgesehen, die durch Tiefziehen herstellbar ist. Ein Querschnitt längs der Linie IX - IX ist in Fig. 9 gezeigt.

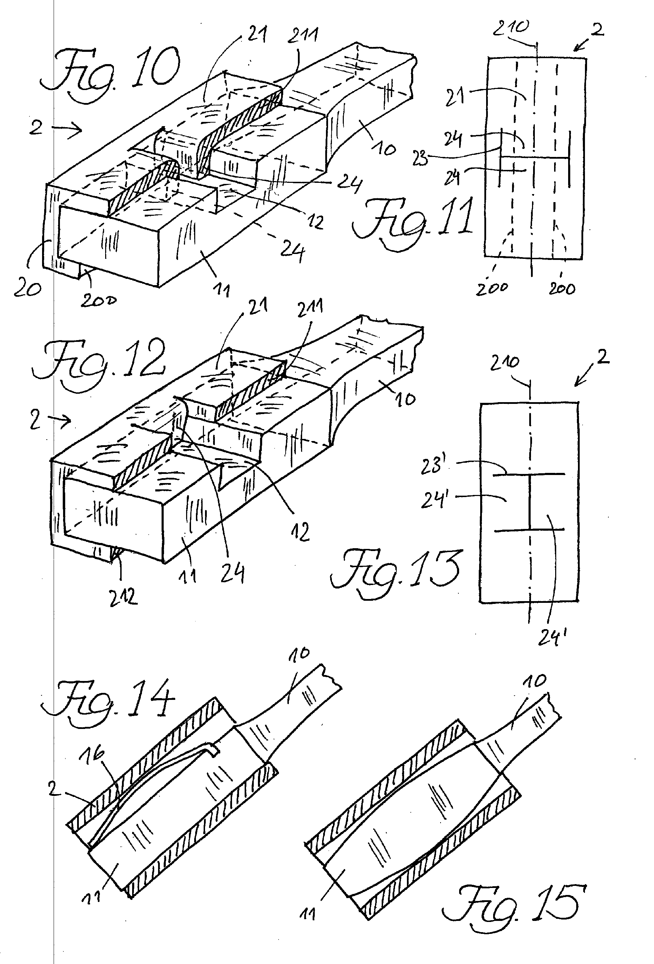

Die Figuren 10 und 11 zeigen eine dritte Ausführungsform des lateralen Reiters 2, der ein C-förmiges Profil mit zwei Längskanten 200 aufweist und von dem in Fig. 10 nur eine Hälfte dargestellt ist. Die zu den Längskanten 200 parallele Schnittkante 211 entspricht der strichpunktierten Linie 210 in Fig. 11, die eine Draufsicht auf das die Flanken 20 verbindende Brückenstück 21 vor einer Befestigung des Reiters 2 zeigt. Die Reiter 2 werden in dem in Fig. 11 gezeigten Zustand auf den Grundkörper 10 der Schaltgabel 1 durch Überschieben an den Enden 11 aufgesetzt. Nach dem Überschieben wird jeder Reiter 2 mit zwei Laschen 24 befestigt, indem diese in die Nut 12 des Schaltgabelendes 11 hinein gebogen werden. Die Laschen 24 ergeben sich aus einem H-förmigen Trennschnitt 23, der in Fig. 11 zu sehen ist. Bei der weiteren in den Figuren 12 und 13 gezeigten Variante ist der Reiter 2 aus einem Vierkantrohr gefertigt (zwei Schnittkanten 211 und 212 in Fig. 12). Befestigungslaschen 24' sind bei dieser Variante aus einem Trennschnitt 23' erzeugt, der gegenüber dem Schnitt 24 um 90° gedreht ist.

Bei einer fünften sowie sechsten Ausführungsform des Reiters 2 - siehe die Figuren 14 und 15 - ist der Reiter 2 jeweils auch aus einem Vierkantrohr gefertigt. Im Fall der Fig. 14 ist der Reiter 2 mit einer am Schaltgabelende 11 angebrachten Blattfeder 16 in einer festen Lage gehalten: Zwischen dem Grundkörper und Reiter ist mindestens eine Kraftschluss vermittelnde Feder angeordnet. Im Fall der Fig. 14 weist das Schaltgabelende 11 eine bauchige Form auf, so dass der Reiter 2 einen schwenkbaren Schuh bildet: Der Grundkörpers weist konvex geformte Anlageflächen zum Reiter auf, aufgrund welcher der Reiter gegenüber dem Grundkörper verschwenkbar ist.

## Patentansprüche

1. Schaltgabel (1) für Fahrzeuggetriebe mit Gleitflächen bildenden Reitern (2, 3), die sich auf einen Grundkörper (10) der Schaltgabel aufsetzen und dabei befestigen lassen,
**dadurch gekennzeichnet, dass** die Reiter aus beschichtem Metall, insbesondere Stahl oder Aluminium in Form eines geformten Blechs oder Rohrs, bestehen und die Gleitflächen (20a, 20b; 30a, 30b) durch Beschichten mit einem Festschmierstoff gefertigt sind.

2. Schaltgabel nach Anspruch 1, **dadurch gekennzeichnet, dass** die Reiter aus einem Blech (3'), insbesondere Stahlblech, durch Ausschneiden sowie plastisches Umformen gefertigt sind.

3. Schaltgabel nach Anspruch 1 oder 2, **dadurch gekennzeichnet, dass** der Festschmierstoff mittels einem thermischen Spritzverfahren, insbesondere Flammspritzen, auf das bearbeitete Metall aufgetragen ist.

4. Schaltgabel nach einem der Ansprüche 1 bis 3, **dadurch gekennzeichnet, dass** Molybdän oder Messing als Festschmierstoff verwendet ist.

5. Schaltgabel nach Anspruch 1 oder 2, **dadurch gekennzeichnet, dass** die Beschichtung aus einem Verbundwerkstoff besteht, wobei der Festschmierstoff in Form von Partikeln eine disperse Phase des Verbundwerkstoffs bildet und der Volumenanteil der dispersen Phase grösser als jener einer Matrixphase ist.

6. Schaltgabel nach Anspruch 5, **dadurch gekennzeichnet, dass** die Matrixphase mit einem aushärtenden Klebstoff oder einem aufschmelzbaren Bindemittel erzeugt wird und der Festschmierstoff vorzugsweise bis mindestens zu 90 Vol-% aus Kohlenstoff besteht.

7. Schaltgabel nach einem der Ansprüche 1 bis 6, **dadurch gekennzeichnet, dass** der Grundkörpers konvex geformte Anlageflächen zum Reiter aufweist, aufgrund welcher der Reiter gegenüber dem Grundkörper verschwenkbar ist.

8. Schaltgabel nach einem der Ansprüche 1 bis 6, **dadurch gekennzeichnet, dass** zwischen dem Grundkörper und Reiter mindestens eine Kraftschluss vermittelnde Feder angeordnet ist.

9. Reiter (2, 3) zu einer Schaltgabel gemäss einem der Ansprüche 1 bis 8, **dadurch gekennzeichnet, dass** er durch Umformen eines Blechs oder Rohrs aus Metall sowie Beschichten gefertigt ist, wobei Gleitflächen (20a, 20b; 30a, 30b) durch Beschichten mit einem Festschmierstoff hergestellt sind.

10. Reiter nach Anspruch 9, **dadurch gekennzeichnet, dass** er zwei langgestreckte, die Gleitflächen (20a, 20b; 30a, 30b) tragenden Flanken (20, 30) umfasst und dass die Flanken mindestens an je einer Seite, insbesondere einer langen Seite, über einen verbindenden Teil (21, 31) zusammenhängen, das mindestens ein durch Umformung erzeugtes Element (22, 22*) enthält oder ein solches Element (31) ist, mit dem der Reiter an der Schaltgabel (1) durch eine Stoffschluss- oder Formschluss-Verbindung befestigbar ist.

11. Reiter nach Anspruch 9 oder 10, **dadurch gekennzeichnet, dass** die Dicke der Beschichtung (20a, 20b; 30a, 30b) grösser als 1 µm und kleiner als 1 mm ist, vorzugsweise einen Wert zwischen 0.08 und 0.12 mm hat.

12. Verfahren zum Herstellen eines Reiters (2, 3) gemäss einem der Ansprüche 9 bis 11, **dadurch gekennzeichnet, dass** in einem ersten Schritt eine äussere Kontur (3') aus einem Stahlblech ausgeschnitten wird, insbesondere gestanzt oder mit Laser geschnitten, wobei gegebenenfalls auch innerhalb der Kontur Trennschnitte (21 a) erzeugt werden, dass in einem zweiten Schritt dieses ausgeschnittene Blechstück mittels Einpressen in ein formgebendes Werkzeug plastisch umgeformt wird, wobei gegebenenfalls dieses plastische Umformen in zwei oder mehr Teilschritten durchgeführt wird, und dass in einem abschliessenden Schritt die Festschmierstoff enthaltenden Gleitflächen (20a, 20b; 30a, 30b) durch Beschichten auf dem Reiter aufgebracht werden
oder dass die Reihenfolge der Schritte so vertauscht ist, dass zuerst die Beschichtung vorgenommen wird.
